# EUROPEAN PATENT APPLICATION

(11) **EP 4 151 092 A1**
(43) Date of publication of application: **22.03.2023**
(21) Application number: 21197721.0
(22) Date of filing: 20.09.2021
(51) Int. Cl.: A01M 21/04

(54) **A CARRYING DEVICE FOR CARRYING A GAS BOTTLE**

(71) Applicant: TWC Systems BV, 1000 Brussel (BE)
(72) Inventor: POLLEUNIS, Marc, Guy, 3470 Kortenaken (BE)
(74) Representative: IP HILLS NV

(57) **Abstract**

A carrying device for carrying a gas bottle, the carrying device comprises a rigid tubing comprising at least a first tube and a second tube. The first tubes first outer end is provided with a coupling means to couple the tubing to a gas bottle, the second outer end of the first tube is connected to the first outer end of the second tube. The first and second tube make an angle (α) in the range of 135° to 20° and define a first plane with which the first and second tube are coplanar. The second tube defines a second plane perpendicular to the first plane, the second tube is in the second plane. The second tube comprises a valve and a handle for operating the valve, which handle is hingedly and springy coupled to the second tube, hinging around an axis of rotation. The perpendicular projection of the axis of rotation on the second plane makes an angle (β1) with the intersecting line of the first and second plane in the range of 30° to 90°, the first tube and the handle being present on the same side of the second plane.

## Description

### Field of the Invention

The present invention generally relates to an apparatus for combatting weeds with heated air, to a method to combat weeds with heated air, as well as to components used in such apparatuses and methods. The present invention also relates to a carrying device for carrying a gas bottle, optionally combined with and coupled to an apparatus for combatting weeds with heated air.

### Background of the Invention

An apparatus for combatting weeds with heated air is known, e.g. from WO2021053202A1. Weeds, i.e. unwanted crops, plants and herbs growing on the soil, like a sand-like or stone-like soil, are treated with a stream of heated air. The weeds dry out and die due to this treatment. Sometimes only one treatment of the weed-grown soil is enough to permanently remove the weeds. Sometimes the treatment only gives temporary results and a second or third treatment of the soil may be necessary to permanently remove the weeds.

As a consequence, there is a need for more efficient and effective thermal treatment of weeds-grown soil.

There is as well a need for a more ergonomic and safe method to carry the handheld apparatus for combatting weeds with heated air, and the necessary bottle of combustible gas.

### Summary of the Invention

According to a first aspect, an apparatus for combatting weeds with heated air is provided. The apparatus for combatting weeds with heated air, the apparatus comprises
- a ventilator for creating an ambient air flow;
- a burner for combustion of combustible gas, the burner obtaining combustion air being a first part of the ambient air flow from the ventilator, and providing an exhaust gas flow;
- an outlet tube to direct a heated air flow to weeds, the heated air flow comprising the exhaust gas flow from the burner and a second part of the ambient air flow from the ventilator;
characterised in that the outlet tube comprises a mixing unit to mix the exhaust gas flow from the burner and the second part of the ambient air flow from the ventilator.

The ventilator is located upstream the burner and provides ambient air to the burner, which ambient air is used in the combustion of the combustible gas by the burner. Such combustible gas may be e.g. hydrocarbon gasses such as methane, ethane, propane, butane and alike and mixtures thereof. Preferably propane is used.

The ventilator hence provides ambient air at a pressure above ambient pressure to the burner. The ambient air flow is divided in at least two parts. A first part of the ambient air flow is provided to the burner for combustion of the combustible gas. The second part of the ambient air flow is directed to the outlet tube, preferably directed along the outer side or surface of the burner, such as along the outer side of the burner housing. The flow rate per time unit of this ambient air flow, being partially provided to the burner and partially to the outlet tube may be in the range of 200 to 2000 m³/h, such as in the range of 300 to 1725 m³/h. Also the combustible gas is provided under pressure to the burner, preferably at a pressure in the range of 100 to 250 mbarg, e.g. in the range of 122 to 200mbarg. "mbarg" is the pressure expressed in millibars over the ambient pressure.

The exhaust gas of the burner is blown out by the burner at a higher pressure as compared to the ambient air flow and is pushed out of the burner into the outlet tube. As such, two flows of air are guided to and through the outflow tube: the exhaust gas flow of the burner and the second part of the ambient air flow. This combination of air flows is used for combatting weeds by a thermal treatment with heated air. The outflow speed of this combined air flow is preferably in the range of 25 m/sec to 100 m/sec, such as in the range of 25 m/sec to 90 m/sec.

It was found that well mixing of both air flows in the outlet tube, i.e. the exhaust air flow and the second part of the ambient air flow, increases the efficiency of the thermal treatment of the weeds to a large extent. The overall exit air of the apparatus, this is the temperature at the outlet opening of the outlet tube, may be reduced, while still having a proper thermal treatment of the weeds near this exit opening. Optionally the linear speed of the treatment of the weeds present on the underground may be increased. This linear speed is the speed of the exit opening of the outlet tube moving along the soil surface being treated.

The apparatus is preferably a handheld apparatus. The gas bottle comprising the combustible gas may be also held in a hand, or may be caried on the back of the user.

According to some embodiments, the mixing unit may comprise at least a first grid. Preferably the at least first grid is present over a section of the outlet tube, such as over a radial section of the outlet tube. The perimeter of the at least first grid preferably matches the inner wall of the outlet tube, most preferably matching the inner wall of the outlet tube along a radial section at one position along the flow axis of the outlet tube.

The grid so-to-say covers the whole section of the outlet tube, preferably at a given position along the axial direction of the air flow in the outlet tube. The grid obstructs the air flow in the outlet tube to some extent. The grid causes the exhaust air flow and the second part of the ambient air flow to be forced to flow through the openings of the grid, causing some turbulence off stream the grid, and causing the two flows to become intimately mixed.

According to some embodiments, the mixing unit may comprise at least a second grid present off stream the first grid. Preferably this second grid is present at a section of the outlet tube such as over a radial section of the outlet tube. The perimeter of the at least second grid preferably matches the inner wall of the outlet tube, most preferably matching the inner wall of the outlet tube along a radial section at one position along the flow axis of the outlet tube.

According to some embodiments, the openings of the first and second grid may be not aligned, i.e. unaligned, or nonaligned, in axial direction of the outlet tube. Such nonaligned grids cause a very efficient mixing of the two air flows.

It is understood that more than two, such as three, four, five, six, seven or more grids may be provided in sequence in the outlet tube in axial direction i.e. in the direction of the air flow. The various grids may be aligned or nonaligned one to the other. preferably the grids are not aligned, i.e. for adjacent grids, the open area of an opening of one grid is at least partially obstructed by the material of the adjacent grid.

The grids may be metal or metallic grids (such as steel or stainless-steel grids) or high temperature resistant polymer grids. The grid may be provided from stretch metal, or may be a perforated metal or polymer sheet, or may be provided from a metal, metallic or polymer woven mesh. The perforations may be circular, though the openings may have any possible shape, such as oval or rectangular, e.g. square.

The various grids may all be identical, or one or more may mutually differ one from the other. The size of the openings in the grid may preferably vary between 15 to 4500 mm², preferably in the range of 28 to 500 mm², e.g. about 134 to 315 mm². The number of openings per surface unit of the grid may vary from 2000 tot 20000 /m². as an example 13500 circular perforations per m² of a diameter of 7mm may be provided.

Preferably the at least first grid is perpendicular to the axial direction of the outlet tube, though possibly the grid may be inclined, e.g. at an angle of 45° to 90° in view of the plane perpendicular to the axial direction. This angle is the smallest angle between the plane perpendicular to the axial direction and the plane of the grid itself. This may apply as well for all other grids present in the mixing unit. Adjacent grids may be parallel one to the other or may be inclined one to the other.

The position of the grid or grids may preferably be about halfway the length of the outlet tube, i.e. halfway the distance between burner exhaust outlet and outlet tube outlet opening. The position of the grid or grids is preferably such that the distance between burner and the grid, or in case more than one grid, the grid closest to the burner, is not less than 50 mm. Preferably the distance between burner and the grid or in case more than one grid, the grid closest to the burner, is between 50 mm and 500mm.

According to some embodiments, the burner may comprise a burner block.

According to some embodiments, a gas valve may be provided immediately upstream a combustible gas inlet of the burner block.

More in general, according to a second independent aspect, an apparatus for combatting weeds with heated air is provided, the apparatus comprises
- a ventilator for creating an ambient air flow;
- a burner for combustion of combustible gas, the burner obtaining combustion air being a first part of the ambient air flow from the ventilator, and providing an exhaust gas flow;
- an outlet tube to direct a heated air flow to weeds, the heated air flow comprising the exhaust gas flow from the burner and a second part of the ambient air flow from the ventilator;
characterised in that the burner comprises a burner block, a gas valve being provided immediately upstream a combustible gas inlet of the burner block.

Such apparatus for combatting weeds with heated air may be an apparatus according to the first aspect of the invention.

The gas valve may be an electronic gas valve. The gas valve may get its command to open and/or close from a controlling unit. The controlling unit may control the functioning of the apparatus, including the moment of giving or not giving combustible gas to the burner.

The apparatus may be provided with one or more temperature sensors. A first temperature sensor may be provided in the outlet tube, measuring the temperature of the mixed outflow. The controlling unit may comprise a means to adjust the ratio of combustible gas flow and the ambient air flow to tune the measured temperature to a given, pre-set but variable value. This first temperature sensor, or a second temperature sensor measuring the flow temperature immediately after the burner, may be used as a safety tool. If the temperature measured is above a given safety value, e.g. 300°C or 350°C, the burner may be switched off, e.g. by closing the combustible gas valve and optionally also the ventilator. The apparatus may optionally be provided with a flow sensor measuring the flow rate of the ambient air flow. The if the flow rate is below a pre-set value, the active apparatus may be switched off, or the activation of the apparatus may be prevented.

The apparatus may be provided with an ignitor, e.g. an electrical ignitor, which may be activated once and each time the combustible gas valve is opened. The ignition may be timed, i.e. the ignitor may eb activated for only a limited period of time, such as a time period between 5 and 10 seconds, e.g. 8 seconds. This activation of the ignitor may be controlled by the controlling unit.

According to the first and/or second aspect of the invention, the burner may comprise a burner block having a hollow body having an elongated shape in an elongate direction, the burner comprises a burner housing being a tubular housing with two open ends, the burner block being provided the burner housing, between the burner block and the burner housing, at least two inlet slots, one along each side in elongated direction of the hollow body of the burner block are provided to allow air from the first part of the ambient air flow to flow along the burner block outer surface, the burner block being provided from polymeric material.

More in general, according to a third independent aspect of the invention, an apparatus for combatting weeds with heated air is provided. The apparatus comprises
- a ventilator for creating an ambient air flow;
- a burner for combustion of combustible gas, the burner obtaining combustion air being a first part of the ambient air flow from the ventilator, and providing an exhaust gas flow;
- an outlet tube to direct a heated air flow to weeds, the heated air flow comprising the exhaust gas flow from the burner and a second part of the ambient air flow from the ventilator;
characterised in that the burner comprises a burner block, the burner block being provided from polymeric material.

Such apparatus for combatting weeds with heated air may be an apparatus according to the first and/or second aspect of the invention.

Preferably the burner block is provided in the open end of the burner housing being closest to the ventilator.

The burner may comprise a burner chamber, a burner block for providing combustible gas in the burner chamber and a burner housing being a hollow tubular housing. The burner block is provided in the opening of the burner housing closest to the ventilator. Between the burner block and the hollow tubular housing, inlet slots are provided to allow the first part of the ambient air flow, being the combustion air, to flow along the burner block into the burner chamber. The inlet slots are provided with air permeable plates to limit the inlet slot at the burner chamber. These air permeable plates are typically metal plates being provided with a plurality of slits, allowing the first part of the ambient air flow to enter the burner chamber.

The first part of the ambient air flow flowing along the burner block, will cool the burner block. to some extent, the first part of the ambient air flow may increase in temperature.

According to some embodiments, the burner comprises a burner chamber, a burner block for providing combustible gas in the burner chamber and a burner housing being a hollow tubular housing, the burner block being provided in the opening of the burner housing which opening is closest to the ventilator, between the burner block and the hollow tubular housing, at least one inlet slot is provided to allow air from the first part of the ambient air flow to flow along the burner block outer surface into the burner chamber, the burner block being provided from polymeric material, or from aluminium or from an aluminium alloy.

The burner block preferably is made from thermally resistant polymer, such as polyamide 6 (PA6) or polyamide 6.6 (PA6.6), such as Ertalon^{®} or Nylatron^{®}, or polyvinyl chloride (PVC) or thermoset polymers. In the alternative, the burner block may be made from metal, such as steel or stainless steel, or aluminium or an aluminium alloy.

The burner block may have a hollow body having an elongated shape in an axial direction. Along an axial zone of the outer surface of the hollow body, the hollow body is provided with a number of apertures. The hollow inner volume of the hollow body is provided with combustible gas, which flows out of the burner block into the burner chamber through these apertures.

The burner block preferably has a hollow cuboid body. One side of the cuboid body is provided with a number of apertures. The hollow inner volume of the cuboid is provided with combustible gas, which flows out of the burner block into the burner chamber through these apertures. Possibly the hollow inner volume is empty.

According to some embodiments, the burner housing may be provided from polymeric material, or aluminium or an aluminium alloy.

According to some embodiments, the burner may comprise a burner chamber, the burner block and the burner housing defining a part of the wall of the burner chamber, the inlet slots are provided with air permeable plates to limit the inlet slot at the burner chamber.

Preferably the burner chamber is a trapezoidal prism as volume. the two trapezium shaped sides are preferably provided by the burner housing. From the two parallel sides, the smallest side is preferably provided or defined by the burner block. The largest of these two sides is preferably an open side, being the exhaust opening of the burner chamber. The two remaining, mutually nonparallel sides are preferably provided by the air permeable plates, delimiting the inlet slots at the side of the burner chamber.

The burner block is provided with a number of apertures to allow gas to pass into the burner chamber. The outmost apertures in the burner block are present and coincide with the side of the adjacent wall delimiting the burner chamber along the direction perpendicular to elongate direction of the shape of the burner block.

These air permeable plates are preferably metal plates, such as plates from aluminium or an aluminium alloy. These air permeable plates are preferably provided with a plurality of slits, defining the apertures, and allowing the first part of the ambient air flow to enter the burner chamber. The slits may be oblique in view of the flow direction of the first part of the ambient air flow in the inlet slot or slots.

The outlet tube may be one integral tube between the coupling with the burner housing and the outlet opening, or may be provided by a number of consecutive tubular sections one coupled to the other. The outlet tube, or if relevant the various tubular sections, may be provided from metal or metallic material (such as steel or stainless-steel), aluminium or an aluminium alloy, or from high temperature resistant polymer. The outlet tube may have a uniform radial cross section, or may have a cross section varying along the axial direction, the latter either with a cross section surface being identical or varying along the axial direction. Possibly the radial cross section may have a shape gradually changing from a rectangle, square or circular shape near the burner housing, to a rectangle or ellipsoid shape at the outlet opening. Possibly the outlet tube may have a straight axial direction or may be curved. The length of the outlet tube may vary between 150mm and 500 mm. Possibly the apparatus is provided with a number of outlet tubes, e.g. 2, 3, 4, 5 or more outlet tubes, which are mutually interchangeable, and having a different length and/or curvature. Such apparatus with a set of outlet tubes is advantageous in case the apparatus is used by a number of persons with mutually different length. The taller persons may choose a longer outlet tube to be coupled to the rest of the apparatus, while smaller persons may opt for a shorter outlet tube.

The apparatus may be provided with a handle to allow carrying of the apparatus by hand. The handle may be provided with an activation button or system to activate the burner. Preferably, the centre of gravity of the apparatus is located near or at the same location along the axis of the apparatus as the handle. Possibly more than one handle and/or more than one activation button may be provided to facilitate different ways to carry the apparatus in use and when not used.

The burner of the apparatus may have an ignition system to ignite the burner. The apparatus may comprise a control system to control the activity of the burner. The control system may comprise a sensor to detect the burner being activated (a flame being present) or not activated (a flame not being present). The control system may comprise a sensor to detect the pressure or flow rate of the ambient air flow provided by the ventilator and may comprise a switch to activate or deactivate the ventilator. The apparatus may comprise a battery or electronic energy carrier to carry electronical energy to drive the ventilator. The apparatus may comprise a gas inlet to allow the provision of combustible gas to the burner. The apparatus may comprise a thermal sensor to measure the temperature of the gas in the outlet tube at a given position along the axial direction. The apparatus may comprise a controller to set and/or adjust the ratio of the ambient air pressure of the air flow provided by the ventilator and the pressure of combustible gas provided to the burner, and/or to set and/or adjust the ratio of the ambient air volume per time unit of the air flow provided by the ventilator and the volume per time unit of combustible gas provided to the burner. The apparatus may comprise a display (such as an LCD display or alike) to display the interface to the user. The interface may provide the user with the activity or the burner, the activity of the ventilator, the presence of combustible gas, the volume or pressure of the ambient air flow and/or the combustible gas, the temperature of the air follow in the outlet tube, the ratio of volume and/or pressure of ambient air flow and combustible gas and alike.

The ventilator is preferably an electrically driven ventilator. The electrical current may be provided by a battery, which may be part of the hand-held apparatus, or which may be carried on the back of the user.

According to a fourth aspect of the invention, a method to combat weeds with heated air is provided. The method comprises:
- providing an apparatus according to any one of the preceding claims and carrying the apparatus in one of the right or left hand;
- providing combustible gas to the apparatus;
- activating the burner of the apparatus such that an outlet air flow at the outlet opening of the apparatus is provided;
- directing to and moving the outlet air flow along the surface on which the weeds are to be combatted.

According to some embodiments, the temperature of the outlet air flow at the outlet opening of the apparatus may be in the range of 130 to 300°C.

It was found that in case the average ambient temperature during the week before the thermal treatment was between 10 and 14 °C, the temperature of the outlet air flow at the outlet opening of the apparatus is preferably chosen between 250°C and 300°C; in case the average ambient temperature during the week before the thermal treatment was between 15 and 18 °C, the temperature of the outlet air flow at the outlet opening of the apparatus is preferably chosen between 180°C and 250°C, whereas in case the average ambient temperature during the week before the thermal treatment was between 19 and 23°C, the temperature of the outlet air flow at the outlet opening of the apparatus is preferably chosen between 130°C and 180°C.

According to some embodiments, the outlet opening of the apparatus may be moved along the surface at a speed of 5 to 50 cm/sec.

According to some embodiments, the combustible gas may be propane. Possibly, hydrocarbon gasses such as methane, ethane, propane, butane and heptane, and combinations of these, or natural gas or hydrogen are used.

The combustible gas may be provided under pressure to the burner, preferably at a pressure in the range of 100 to 250 mbarg, e.g. in the range of 122 to 200mbarg. To provide the combustible gas from a container or bottle of combustible gas one or more regulators may be provided between the combustible gas container or bottle and the apparatus.

According to some embodiments, the combustible gas may be provided from a hand-carried gas bottle. According to some embodiments, the apparatus may be carried in one of the right or left hand, the hand carried gas bottle is carried in the other of the right or left hand. The combustible gas may be conducted from the hand carried gas bottle to the apparatus by means of any suitable gas supply tubing.

According to a fifth independent aspect of the invention, a carrying device for carrying a gas bottle is provided. The carrying device comprises a rigid tubing comprising at least a first tube and a second tube, the first tubes first outer end is provided with a coupling means to couple the tubing to a gas bottle, the second outer end of the first tube is connected to the first outer end of the second tube, the first and second tube make an angle (α) in the range of 135° to 20° and define a first plane with which the first and second tube are coplanar, the second tube defining a second plane perpendicular to the first plane, the second tube is in the second plane; the second tube comprises a valve and a handle for operating the valve, the handle is hingedly and springy coupled to the second tube, hinging around an axis of rotation, the perpendicular projection of the axis of rotation on the second plane makes an angle (β1) with the intersecting line of the first and second plane in the range of 30° to 90°, the first tube and the handle being present on the same side of the second plane. According to some embodiments, the perpendicular projection of the axis of rotation on the second plane may make an angle with the intersecting line of the first and second plane in the range of 80° to 100°, preferably of 90°.

Preferably the second outer end of the first tube is rigidly connected to the first outer end of the second tube. Preferably the second outer end of the first tube is immovably connected to the first outer end of the second tube, i.e. that both parts cannot move one to the other once connected.

According to some embodiments, the perpendicular projection of the axis of rotation on a third plane, the third plane being perpendicular to the first and second plane, may make an angle (β2) with the intersecting line of the first and third plane in the range of 30° to 90. According to some embodiments, the perpendicular projection of the axis of rotation on a third plane, the third plane being perpendicular to the first and second plane, may make an angle with the intersecting line of the first and third plane of 80° to 100°, preferably of 90°.

The carrying device according to this aspect of the invention has the advantage that, when a gas bottle is carried by lifting the carrying device by one hand and thereby holding the second tube substantially horizontal, the gravity force will force the handle to be pressed towards the second tube. As such, and in case the valve is fully opened with the handle in this position against the second tube, the gas stream exiting the gas bottle will automatically pass when lifting the gas bottle. When the bottle is dropped or put aside on a supporting surface, the handle will be released, and the gas flow is immediately shut off. As such, this carrying device is a safety instrument, closing the gas flow wen the carrying device is released. Hence the valve is mount such that the valve opens by bringing the handle closer to the second tube.

According to some embodiments, the carrying device further may comprise at least one gas bottle regulator. Possibly more than one regulator is used. Optionally this one regulator, or one of the regulators in case more than one regulator is used, is adjustable, i.e. the gas pressure after the regulator in gas flow direction can be set by a setting means, like a control button. According to some embodiments, the gas bottle regulator may be positioned off stream the valve.

According to some embodiments, the first and second tube may make an angle in the range of 80° to 100°.

According to some embodiments, the maximum angle (ϕ) between the hinge and the second tube may be in the range of 25° to 60. This angle is the angle of the hinge and the second tube made in the plane defined by the hinge and the second tube. The carrying device can be used to carry bottles of combustible gasses. The bottles can be carried by one hand using the carrying device, simultaneously controlling the gas being released from the bottle by handing the handle of the carrying device.

Optionally, the second end of the second tube is connected to the first outer end of the third tube which may be coplanar with the first and second tube, and which may be oriented in the same direction as the first tube in view of the second tube. Also this connection can be carried out rigidly or immovably.

According to a sixth aspect of the invention, the use of the carrying device according to the fifth aspect of the invention to provide combustible gas to an apparatus to combat weeds with heated air is provided. This apparatus to combat weeds with heated air may be an apparatus according to the first, second or third aspect of the invention.

According to a seventh aspect of the invention, a method to combat weeds with heated air is provided. The method comprises
- providing an apparatus to combat weeds with heated air and carrying the apparatus in one of the right or left hand;
- carrying a gas bottle of combustible gas by making use of a carrying device according to the fifth aspect of the invention, carrying the carrying device in the other of the right or left hand;
- activating the burner of the apparatus such that an outlet air flow at the outlet opening of the apparatus is provided;
- directing to and moving the outlet air flow along the surface on which the weeds are to be combatted.

According to some embodiments, a gas supply tubing is used to couple the carrying device to the combustible gas inlet of the apparatus to combat weeds with heated air.

The apparatus to combat weeds with heated air may be an apparatus according to the first and/or second and/or third aspect of the invention.

The use of an apparatus to combat weeds with heated air held in one hand and the use of a carrying device according to the fifth aspect of the invention combined with a gas bottle in the other hand, has the advantage that the user of these apparatuses can carry an approximately equal load in both hands. This provides a quite ergonomic carrying situation due to the approximately equal load on both sides of the body of the user. On the other hand, the use of the carrying device according to the invention has the advantage that, in case something goes wrong, and the bottle of gas is dropped, all gas flow may be immediately interrupted. Hence it provides a safe working situation.

According to some embodiments, the temperature of the outlet air flow at the outlet opening of the apparatus may be chosen between 250°C and 300°C when the average ambient temperature during the week before the thermal treatment was between 10 and 14 °C.

According to some embodiments, the temperature of the outlet air flow at the outlet opening of the apparatus may be chosen between 180°C and 250°C when the average ambient temperature during the week before the thermal treatment was between 15 and 18 °C.

According to some embodiments, the temperature of the outlet air flow at the outlet opening of the apparatus may be chosen between 130°C and 180°C when the average ambient temperature during the week before the thermal treatment was between 19 and 23°C.

According to some embodiments, the temperature of the outlet air flow at the outlet opening of the apparatus may be preferably chosen between 250°C and 300°C when the average ambient temperature during the week before the thermal treatment was between 10 and 14 °C, the temperature of the outlet air flow at the outlet opening of the apparatus being chosen between 180°C and 250°C when the average ambient temperature during the week before the thermal treatment was between 15 and 18 °C, the temperature of the outlet air flow at the outlet opening of the apparatus being chosen between 130°C and 180°C when the average ambient temperature during the week before the thermal treatment was between 19 and 23°C.

These methods have the advantage that the combustible gas consumption is lowered, as the weeds are treated with a temperature enough to kill the weeds, while not overconsuming energy.

### Brief Description of the Drawings

Fig. 1 illustrates schematically a cross section of an apparatus according to the invention.
Fig. 2 is an exploded view of the apparatus of figure 1.
Fig. 3 is an exploded view and an assembled view of the burner, being part of the apparatus of figure 1 and 2.
Fig. 4 illustrates the mixing unit being part of the apparatus of figure 1 and 2.
Fig. 5 and Fig. 6 illustrate a carrying device for carrying a gas bottle according to the invention. Fig. 5 is an exploded view; Fig. 6 shows the device from different angles of view.

In the various figures, the same references refer to the same or similar features.

### Detailed Description of Embodiment(s)

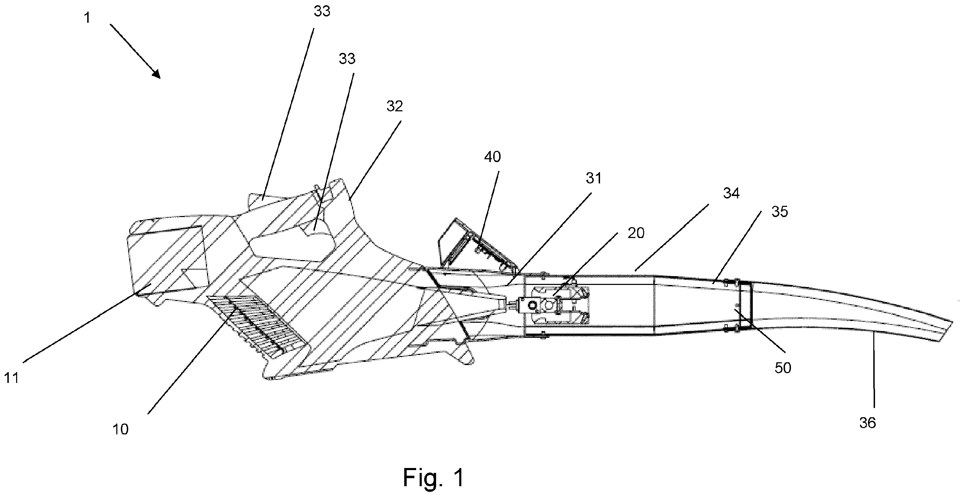

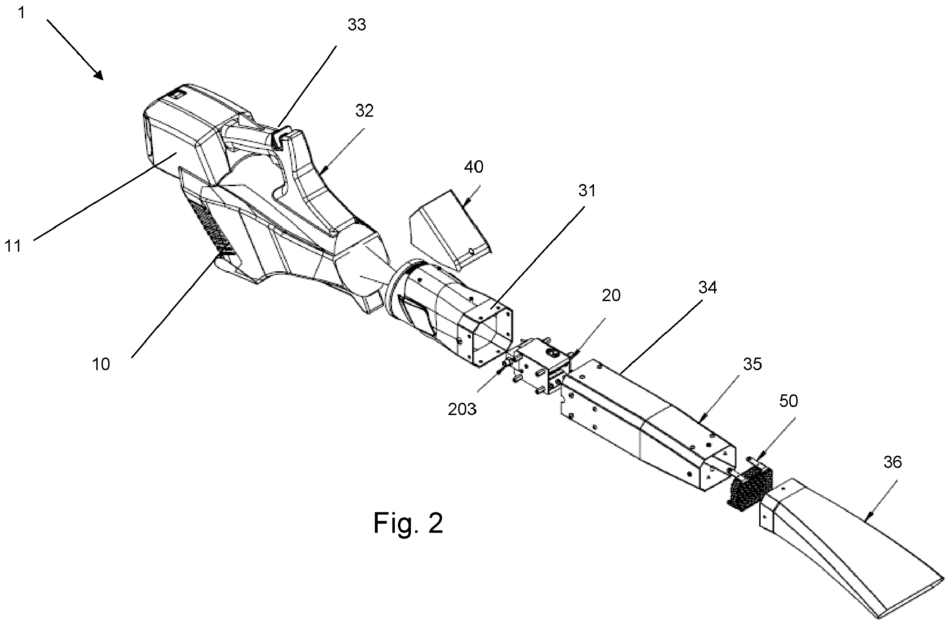

An apparatus 1 according to the present invention is shown in the figures 1 and 2.

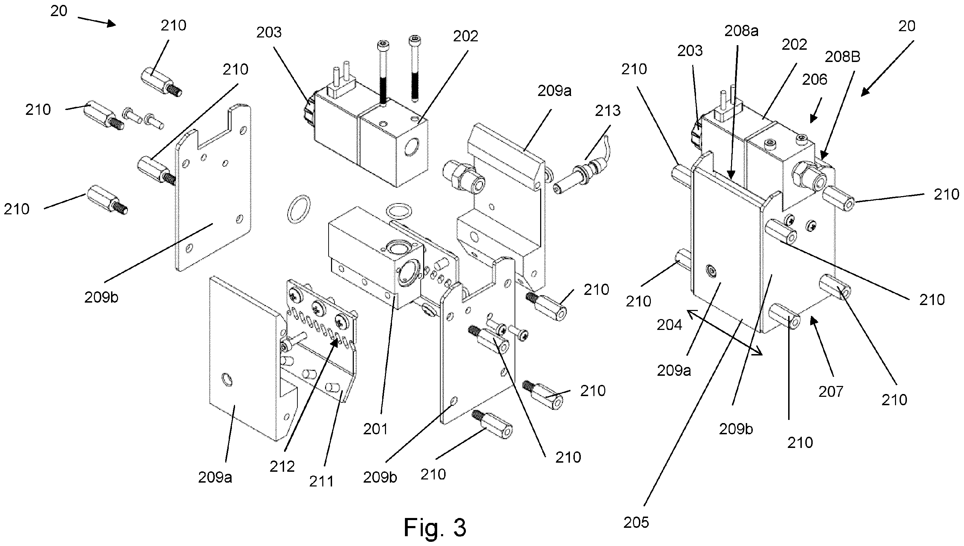

This hand-held apparatus 1 for combatting weeds with heated air, comprises a ventilator 10 for creating an ambient air flow. The ventilator 10 is located at the backside of the apparatus 1 and is electrically driven by electrical power provided by a battery 11. The ventilator 10 and the battery is held in an appropriate housing. The ventilator 10 sucks air from the ambient and blows it via a housing part 31 into a flow direction towards a burner 20. As such an ambient air flow is provided. Hence off stream the ventilator 10 and housing 31, a burner 20 is positioned, details of which are shown in figure 3.

Adjacent the battery 11 and the ventilator, a handle 32 is provided to hold the apparatus 1. Activation buttons 33 are provided to activate the apparatus 1, i.e. the ventilator 10 and the burner 20. A display 40 is provided to give information on the activation and conditions of the apparatus 1 to the user.

The burner 20 for combustion of combustible gas, in this case preferably propane, obtains combustion air being a first part of the ambient air flow from the ventilator 10. The burner 20 comprises a burner block 201, in this embodiment made from aluminium. In alternative embodiments, this burner block may be provided from Ertalon, thereby reducing the weight of the apparatus 1. Combustible gas is provided via gas valve 202, receiving combustible gas via gas inlet 203, the gas valve 202 being mounted immediately on and upstream the burner block 201. The burner block 201 has hollow empty body having an elongated shape in an elongate direction 204. Combustible gas is provided from the burner block into the burner housing 205 via a number of small perforations (not shown in figure 3). The burner housing 205 is a tubular housing with two open ends 206 and 207, the burner block 201 is provided in the burner housing 205, thereby defining, between the burner block 201 and the burner housing 205, at least two inlet slots 208a and 208b, one along each side in elongated direction of the hollow body of the burner block. Via these inlet slots 208a and 208b, a first part of the ambient air flow can flow into the burner chamber positioned under the burner block 201 and in between the plates 209a and 209b of the burner housing 205. These plates may be provided from aluminium. Along the other surfaces of these plates 209a and 209b, hence along the outer surface of the burner housing 205, the second part of the ambient air stream flows along the burner housing 205 towards the outlet of the apparatus 1. The burner housing 25 is held inside a tubular part 34 of the apparatus 1 by means of spacers 210.

Inside the burner chamber of the burner 20, the first part of the ambient air flow is mixed with the combustible gas. The burner chamber is delimited at the sides of the plates 209a, by aluminium air permeable plates 211 being provided with apertures 212. These apertures 212, of which one is located immediately adjacent the plates 209b, distribute the first part of the ambient air flow.

The air/combustible gas mixture is ignited in the burner chamber and flows out of the opening 207 into the hollow tubular part 34 of the apparatus, providing an exhaust gas flow. The air/combustible gas mixture is initially ignited by an ignitor 213, but one ignited, the combustion is self-maintaining until the combustible gas flow is shut off.

The apparatus further comprises an outlet tube 35 to direct a heated air flow to weeds, the heated air flow comprising the exhaust gas flow from the burner 20 and a second part of the ambient air flow from the ventilator 10.

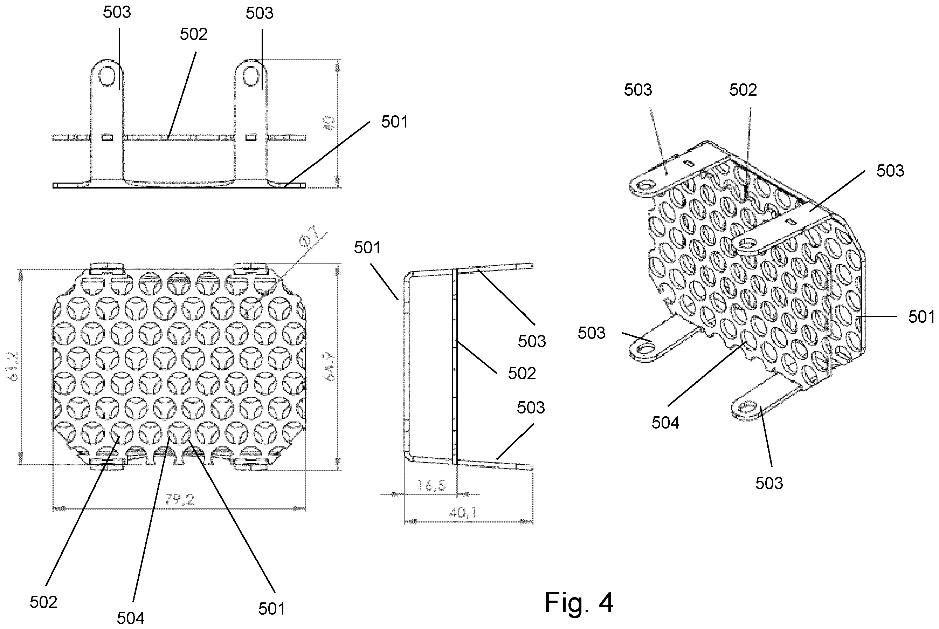

In the outlet tube 35 comprises a mixing unit 50 to mix the exhaust gas flow from the burner 20 and the second part of the ambient air flow from the ventilator 10 is provided. Details of a possible embodiment of such mixing unit 50 is shown in figure 4. The mixing unit comprises in this embodiment two grids 501 and 502, the second grid being mounted off stream the first grid 501. The grids 501 and 502 are identical perforated plates. The grids are held together by four lips 503 being part of the second grid 502, and which are screwed to the inside of the outlet tube 35. The length of the lips is 40mm. the distance between the two grids is 16,5mm. the dimensions of the grids are 61,2 by 79,2mm, and match the inner perimeter of the outlet tube 35 snugly. The grids are perforated metal plates, having perforations of 7mm diameter, 9mm spaces centre to centre. The perforations 504 of the two grids are not aligned. The perforations are shifted 4,5mm. The combined flow of exhaust gas and second part of the ambient air flow is to pass through this obstacle and gets mixed intimately.

Off stream this mixing unit 50, the outlet tube 35 to direct a heated air flow to weeds comprises an outlet part 36 which goes from a substantially rectangular cross section to another rectangular cross section which is narrowed in height but enlarged in width. As such a finer mixed air flow layer can be directed to the weeds.

Not shown in the figures, is the presence of a temperature sensor off stream the mixing unit. The signal of this sensor can be used to tune the combustible gas flow and/or the ambient air flow, thereby bringing the measured temperature of the mixed flow to the required temperature. Similarly, not shown in the figures is a flow sensor measuring the volume of ambient air displaced by the ventilator. If the air flow rate is not large enough, the apparatus may be shut down.

The apparatus 1 may comprise a control unit to coordinate the functioning of the apparatus, and to enable switching on or shutting down the apparatus if the working conditions of the apparatus are not safe.

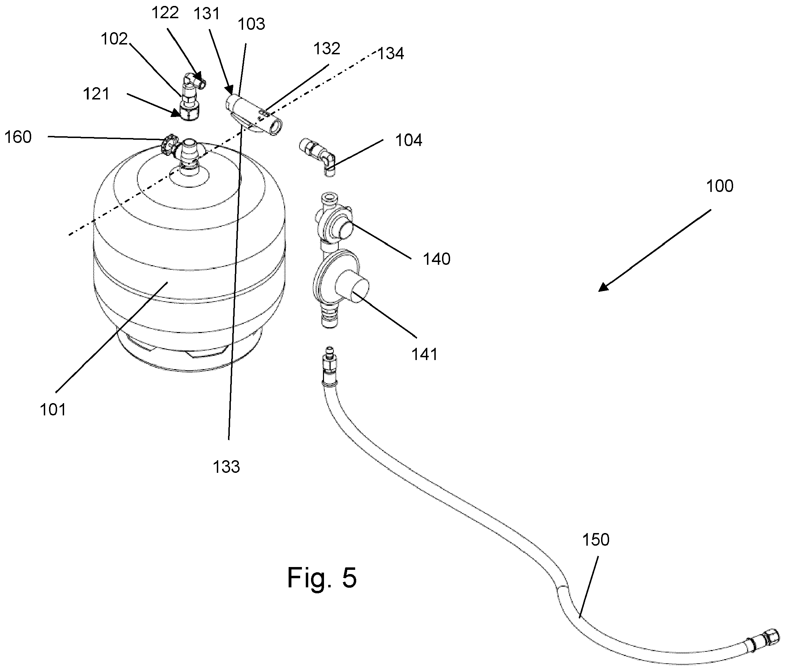

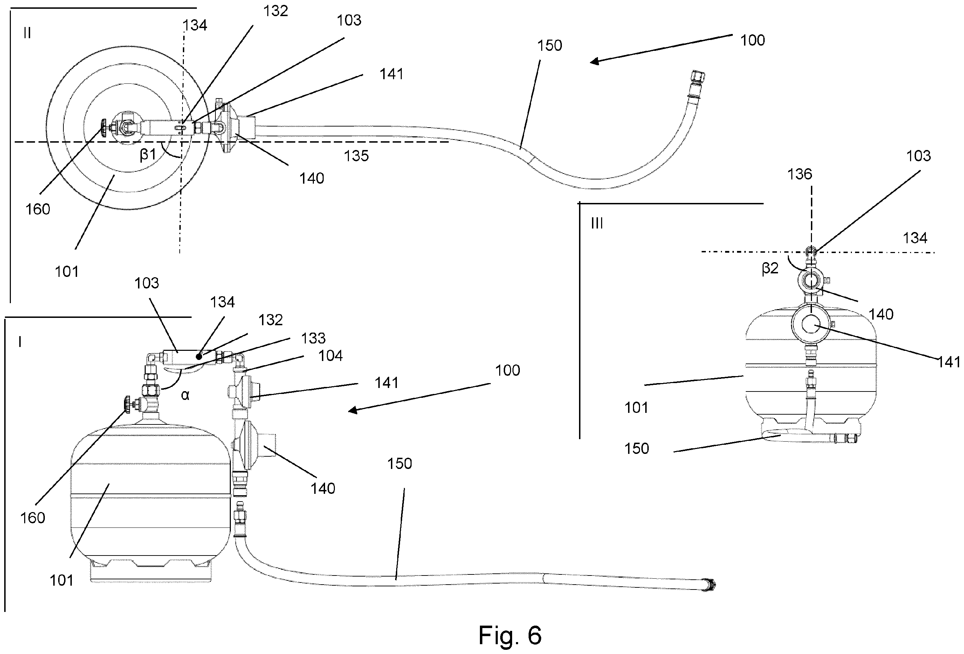

Figures 5 and 6 show a carrying device 100 for carrying a gas bottle 101. The carrying device 100 comprises a rigid tubing comprising at least a first tube 102 and a second tube 103, and a third tube 104.

The first tubes first outer end 121 is provided with a coupling means to couple the tubing 102 to a gas bottle 101. The second outer end 122 of the first tube 102 is connected to the first outer end 131 of the second tube 103. The first and second tube make an angle α of 90° and define a first plane I with which the first and second tube are coplanar.

The second tube defines a second plane II perpendicular to the first plane I. The second tube 103 is in the second plane.

The second tube 103 comprises a valve 132 and a handle 133 for operating the valve, the handle 133 is hingedly and springy coupled to the second tube 103, hinging around an axis of rotation 134. In figure 5, the handle is shown in its position closest to the second tube 103, whereby the valve 132 is fully opened. This position of the handle 133 is reached when the carrying device 100 is carried by a hand of a user (not shown), the hand enclosing the valve and handle. Due to the weight of the bottle 101, the handle is pressed to the second tube.

The perpendicular projection of the axis of rotation on the second plane II makes an angle β1 with the intersecting line 135 of the first and second plane of 90°, while the first tube 102 and the handle 133 are present on the same side of the second plane. A third plane III is provided, being perpendicular to the first and second plane. The perpendicular projection of the axis of rotation 134 on this third plane III, makes an angle β2 with the intersecting line 136 of the first and third plane of 90°.

A carrying device further comprises a third tube 104 which is again inclined over an angle of 90° in view of the second tube 102, and is oriented parallel to the first tube downwards, similarly as the first tube. On this third tube two gas bottle regulators 140 and 141 are provided, both positioned off stream the valve 132. Regulator 140 decreases the gas pressure to an intermediate value, while the second regulator is an adaptable regulator. The pressure after the second regulator 1041 can be tuned. The pressure provided after regulator 141 is preferably in the range of 100 to 250 mbarg, e.g. in the range of 122 to 200mbarg. The combustible gas provided after the second regulator 141 is guided further via gas tube 150. The gas bottle itself may comprise a main valve 160 to shut off all gas flow from the gas bottle 101.

The combustible gas may be provided to the gas inlet 203 of an apparatus 1 as shown in figures 1 to 4. As such the apparatus 1 may be carried by the user in one of his or her hands, while the gas bottle may be carried by means of the carrying device 100 in the other hand of the user. At both sides, the user has now a weight to be carried, which may be similar. This provides a more ergonomic way to carry the apparatus and the gas bottle in a safe way while combatting weeds with heated air.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A carrying device for carrying a gas bottle, the carrying device comprises a rigid tubing comprising at least a first tube and a second tube, the first tubes first outer end is provided with a coupling means to couple the tubing to a gas bottle, the second outer end of the first tube is connected to the first outer end of the second tube, the first and second tube make an angle (α) in the range of 135° to 20° and define a first plane with which the first and second tube are coplanar, the second tube defining a second plane perpendicular to the first plane, the second tube is in the second plane; the second tube comprises a valve and a handle for operating the valve, said handle is hingedly and springy coupled to the second tube, hinging around an axis of rotation, the perpendicular projection of the axis of rotation on the second plane makes an angle (β1) with the intersecting line of the first and second plane in the range of 30° to 90°, the first tube and the handle being present on the same side of the second plane.

2. A carrying device according to claim 1, wherein the perpendicular projection of the axis of rotation on a third plane, the third plane being perpendicular to the first and second plane, makes an angle (β2) with the intersecting line of the first and third plane in the range of 30° to 90°.

3. A carrying device according to any one of the claims 1 to 2, wherein the perpendicular projection of the axis of rotation on the second plane makes an angle with the intersecting line of the first and second plane in the range of 80° to 100°, preferably of 90°.

4. A carrying device according to claim 3, wherein the perpendicular projection of the axis of rotation on a third plane, the third plane being perpendicular to the first and second plane, makes an angle with the intersecting line of the first and third plane of 80° to 100°, preferably of 90°.

5. A carrying device according to any one of the claims 1 to 4, wherein the carrying device further comprises at least one gas bottle regulator.

6. A carrying device according to claim 5, wherein the gas bottle regulator is positioned off stream the valve.

7. A carrying device according to any one of the claims 1 to 6, wherein first and second tube make an angle in the range of 80° to 100°.

8. A carrying device according to any one of the claims 1 to 7, wherein the maximum angle (ϕ) between the hinge and the second tube is in the range of 25° to 60.

9. The use of the carrying device according to any one of the claims 1 to 8, to provide combustible gas to an apparatus to combat weeds with heated air.

10. A method to combat weeds with heated air, the method comprises
• providing an apparatus to combat weeds with heated air and carrying said apparatus in one of the right or left hand;
• carrying a gas bottle of combustible gas by making use of a carrying device according to any one of the claims 1 to 8, carrying said carrying device in the other of the right or left hand;
• activating the burner of said apparatus such that an outlet air flow at the outlet opening of the apparatus is provided;
• directing to and moving said outlet air flow along the surface on which the weeds are to be combatted.

11. A method according to claim 10, wherein a gas supply tubing is used to couple the carrying device to the combustible gas inlet of the apparatus to combat weeds with heated air.

12. A method according to claim 10 or 11, wherein the temperature of the outlet air flow at the outlet opening of the apparatus is chosen between 250°C and 300°C when the average ambient temperature during the week before the thermal treatment was between 10 and 14 °C.

13. A method according to claim 10 or 11, wherein the temperature of the outlet air flow at the outlet opening of the apparatus is chosen between 180°C and 250°C when the average ambient temperature during the week before the thermal treatment was between 15 and 18 °C.

14. A method according to claim 10 or 11, wherein the temperature of the outlet air flow at the outlet opening of the apparatus is chosen between 130°C and 180°C when the average ambient temperature during the week before the thermal treatment was between 19 and 23°C.

15. A method according to claim 10 or 11, wherein the temperature of the outlet air flow at the outlet opening of the apparatus is preferably chosen between 250°C and 300°C when the average ambient temperature during the week before the thermal treatment was between 10 and 14 °C, the temperature of the outlet air flow at the outlet opening of the apparatus being chosen between 180°C and 250°C when the average ambient temperature during the week before the thermal treatment was between 15 and 18 °C, the temperature of the outlet air flow at the outlet opening of the apparatus being chosen between 130°C and 180°C when the average ambient temperature during the week before the thermal treatment was between 19 and 23°C.
